**Europäisches Patentamt**

**European Patent Office**

**Office européen des brevets**

(19)

(11) Veröffentlichungsnummer: **0 262 460**
**A2**

(12) **EUROPÄISCHE PATENTANMELDUNG**

(21) Anmeldenummer: 87112981.3

(22) Anmeldetag: 04.09.87

(51) Int. Cl.⁴: **H04N 7/133**

(30) Priorität: 30.09.86 DE 3633185

(43) Veröffentlichungstag der Anmeldung:
06.04.88 Patentblatt 88/14

(84) Benannte Vertragsstaaten:
DE FR GB IT NL SE

(71) Anmelder: **Siemens Aktiengesellschaft Berlin und München**
**Wittelsbacherplatz 2**
**D-8000 München 2(DE)**

(72) Erfinder: **Strobach, Peter, Dr.**
**Bahnsteig 6**
**D-8391 Röhrbach(DE)**
Erfinder: **Hölzlwimmer, Herbert, Dipl.-Ing.**
**Joseph-Selfriedstrasse 26**
**D-8000 München 50(DE)**
Erfinder: **Tengler, Walter, Dipl.-Ing.**
**Max-Rimmele-Strasse 46**
**D-8904 Friedberg(DE)**

(54) Anordnung zur optimierten Gewichtung uebertragener Transformationskoeffizienten bei Transformationscodierern zum Zwecke der Minimierung von Faltungsverzerrungen.

(57) Eine Anordnung zur optimierten Gewichtung übertragener Transformationskoeffizienten bei Transformationscodierern zum Zwecke der Minimierung von Faltungskoeffizienten bei der Transformationscodierung von Bildsignalen zum Zwecke einer Datenreduktion und/oder zum Zwecke der Einhaltung einer vorgegebenen Kanalrate, bei der vorgesehen ist, daß die zu übertragenden Koeffizienten zusätzlich einer Gewichtung (Windowing) (W) unterzogen werden und daß die Auswahl der jeweils geeigneten Gewichtungsfaktoren, die eine Minimierung der Faltungsverzerrungen in dem rekonstruierten Bild bewirken, in Abhängigkeit von der Anzahl der zu übertragenden Koeffizienten durchgeführt wird.

**FIG 1**

SENDER:

Bild Signal — T — S — W — Kanal

EMPFANGER:

Kanal — IW — IT — rekonstruiertes Bild

T: Transformation
S: Auswahl der zu übertragenden Transformationskoeffizienten(Selektor)
W: Gewichtung (Windowing) der zu übertragenden Transformationskoeffizienten
IW: Kompensation oder Teilkompensation der im Sender angewandten Windows
IT: Inverse Transformation

**Anordnung zur optimierten Gewichtung übertragener Transformationskoeffizienten bei Transformationscodierern zum Zwecke der Minimierung von Faltungsverzerrungen**

Die vorliegende Erfindung betrifft eine Anordnung zur optimierten Gewichtung übertragener Transformationskoeffizienten bei Transformationscodierern zum Zwecke der Minimierung von Faltungskoeffizienten.

Bei der Transformationscodierung von Bildern ist es oftmals erforderlich, zum Zwecke einer weiteren Datenreduktion oder zum Zwecke der Einhaltung einer vorgegebenen Kanalrate nur eine Teilmenge aller Transformationskoeffizienten zu übertragen. Beispielsweise kann bei Videokonferenzcodierern, die auf dem Prinzip der Transformationscodierung basieren, der Pufferregler durch Vorgabe der Anzahl der zu übertragenden Transformationskoeffizienten auf die Übertragungsrate Einfluß nehmen, vergl. z. B. deutsche Patentanmeldung P 35 13 877.7 ("Verfahren zur Bilddatenreduktion für digitale Fernsehsignale"). Diese Beschränkung der Anzahl der zu übertragenden Koeffizienten kann im rekonstruierten Signal am Ausgang des Empfängers zu Faltungsverzerrungen führen, die vor allem an Objekträndern störend sichtbar werden.

Eine Transformationscodierung oder ein vergleichbares Verfahren bzw. eine Anordnung zur Lösung dieses Problems ist bisher aus dem Stand der Technik nicht bekannt.

Der vorliegenden Erfindung liegt die Aufgabe zugrunde, eine Anordnung der eingangs genannten Art zu schaffen, die das erläuterte Problem beseitigen kann.

Diese Aufgabe der Erfindung wird durch eine Anordnung der eingangs genannten Art und gemäß dem Oberbegriff des Patentanspruchs gelöst, die durch den in dem kennzeichnenden Teil des Patentanspruchs angegebenen Merkmale charakterisiert ist.

Im folgenden wird die vorliegende Erfindung anhand mehrerer Figuren, die jeweils bevorzugte Ausführungsbeispiele für die Erfindung betreffen, im einzelnen beschrieben.

Fig. 1 zeigt eine schematische Darstellung einer Anordnung zur optimierten Gewichtung übertragener Transformationskoeffizienten zum Zwecke der Minimierung von Faltungsverzerrungen gemäß der vorliegenden Erfindung.

Fig. 2 zeigt ein ins einzelne gehendes Blockschaltbild eines ersten Ausführungsbeispiels für einen Sender mit einer "Window-Kompensation" nach dem DPCM-Speicher innerhalb des Senders.

Fig. 3 zeigt ein ins einzelne gehendes Blockschaltbild eines ersten Ausführungsbeispiels für einen Empfänger mit einer "Window-Kompensation" nach dem DPCM-Speicher innerhalb des Empfängers.

Fig. 4 zeigt ein ins einzelne gehendes Blockschaltbild eines zweiten Ausführungsbeispiels für einen Sender mit einer "Window-Kompensation" nach dem DPCM-Speicher innerhalb des Senders.

Fig. 5 zeigt ein ins einzelne gehendes Blockschaltbild eines zweiten Ausführungsbeispiels für einen Empfänger mit einer "Window-Kompensation" nach dem DPCM-Speicher innerhalb des Empfängers.

Fig. 6 zeigt ein Blockschaltbild eines Ausführungsbeispiels für einen Sender mit Transformation innerhalb der DPCM-Schleife.

Fig. 7 zeigt ein Blockschaltbild eines Ausführungsbeispiels für einen Empfänger für den Betrieb mit dem Sender mit Transformation innerhalb der DPCM-Schleife gemäß Fig. 6, wobei abhängig von den Realisierungsbedingungen am Ausgang des Empfängers entweder eine Konfiguration DCT - W(t) - IDCT oder das äquivalente Filter (F(t) eingesetzt wird.

Die Faltungsverzerrungen lassen sich vermeiden, wenn die zu übertragenden Koeffizienten erfindungsgemäß zusätzlich einer Gewichtung ("Windowing" unterzogen werden. Die Auswahl der geeigneten Gewichtungsfaktoren, die eine Minimierung der Faltungsverzerrungen im rekonstruierten Bild bewirken, erfolgt dabei in Abhängigkeit von der Anzahl der zu übertragenden Koeffizienten.

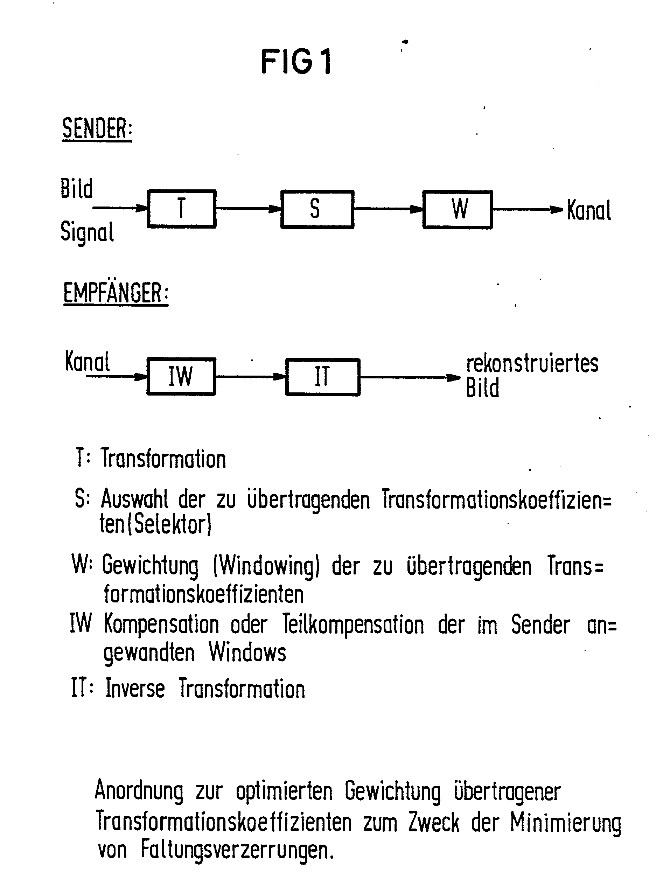

Wie bereits erläutert, zeigt Fig. 1 eine schematische Darstellung, und zwar in Form eines Blockschaltbilds, einer derartigen Anordnung zur optimierten Gewichtung übertragener Transformationskoeffizienten. Wie der Figur zu entnehmen ist, weist ein Sender, dem ein Bildsignal zugeführt wird, eine Struktur mit einer Reihenschaltung, bestehend aus einer Transformationsstufe T, einer Selektorstufe S zur Auswahl der zu übertragenden Transformationskoeffizienten und einer Gewichtungsstufe W zur Gewichtung (Windowing) der zu übertragenden Transformationskoeffizienten, auf, und ein dazu passender Empfänger auf der anderen Seite des Kanals weist eine Struktur mit einer Reihenschaltung, bestehend aus einer Kompensationsstufe IW zur Kompensation oder Teilkompensation der in dem Sender angewandten "Windows" und einer Transformationsstufe IT zur inversen Transformation zur Wiedergewinnung des Bildsignals auf.

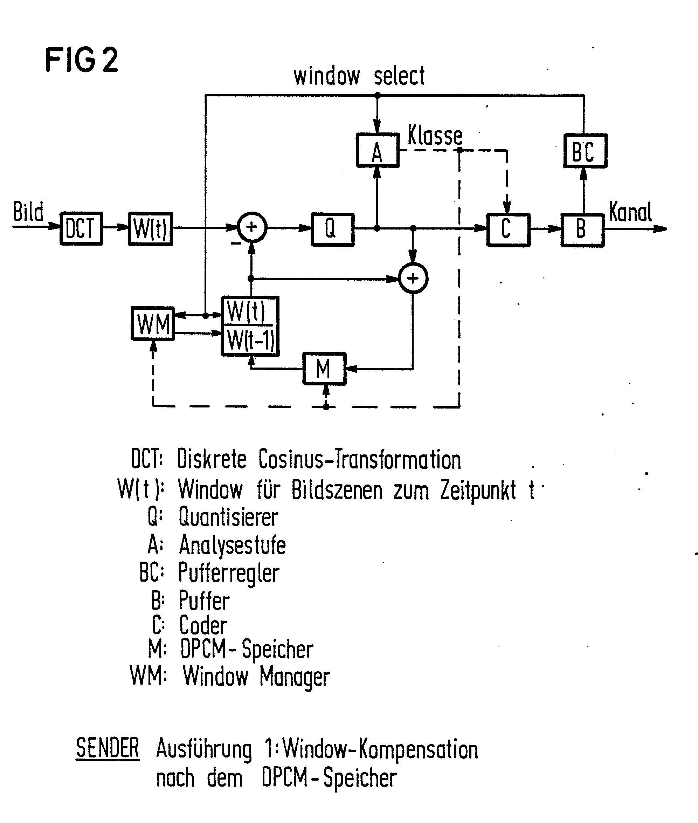

Fig. 2 zeigt, wie bereits erläutert, ein erstes Ausführungsbeispiel für einen Sender mit einer "Window-Kompensation" nach dem DPCM-Speicher. Das Bildsignal wird bei diesem Sender zunächst einer diskreten Cosinus-Transformation DCT zugeführt. Dieser Transformation schließt sich eine Stufe W(t) zum Bilden eines "Window" für Bildszenen zum Zeitpunkt t an. Der Ausgang dieser Stufe W(t) ist an einen ersten Eingang eines Subtraktionsglieds geführt, dessen Ausgang mit einem Quantisierer Q verbunden ist. Der Ausgang des Quantisierers Q ist mit einer Analysestufe A, einem Coder C und einem ersten Eingang eines Summierglieds verbunden. Der Ausgang des Summierglieds ist mit dem Eingang eines DPCM-Speichers M verbunden, dem über einen Seiteneingang ein Ausgangssignal der Analysestufe A, nämlich ein Klassensignal, zugeführt wird, das desweiteren einem sog. Window-Manager WM zugeführt wird. Der Ausgang des DPCM-Speicher M ist mit einem Eingang einer Verarbeitungsstufe W(t)/W(t-1) verbunden, der über einen weiteren Eingang ein Ausgangssignal des Window-Managers WM zugeführt wird. Ein Ausgang der Verarbeitungsstufe ist mit dem zweiten Eingang des Subtraktionsglieds und außerdem mit dem weiteren Eingang des Summierglieds verbunden. Der Ausgang des Coders C ist mit dem Eingang eines Puffers B verbunden, dessen Ausgang zu dem Kanal führt. Ein weiterer Ausgang des Puffers B ist mit einem Eingang eines Pufferreglers BC verbunden, dessen Ausgang mit einem zweiten Eingang der Analysestufe A, einem weiteren Eingang des Window-Managers WM sowie einem weiteren Eingang der Verarbeitungstufe W(t)/W(t-1) verbunden ist.

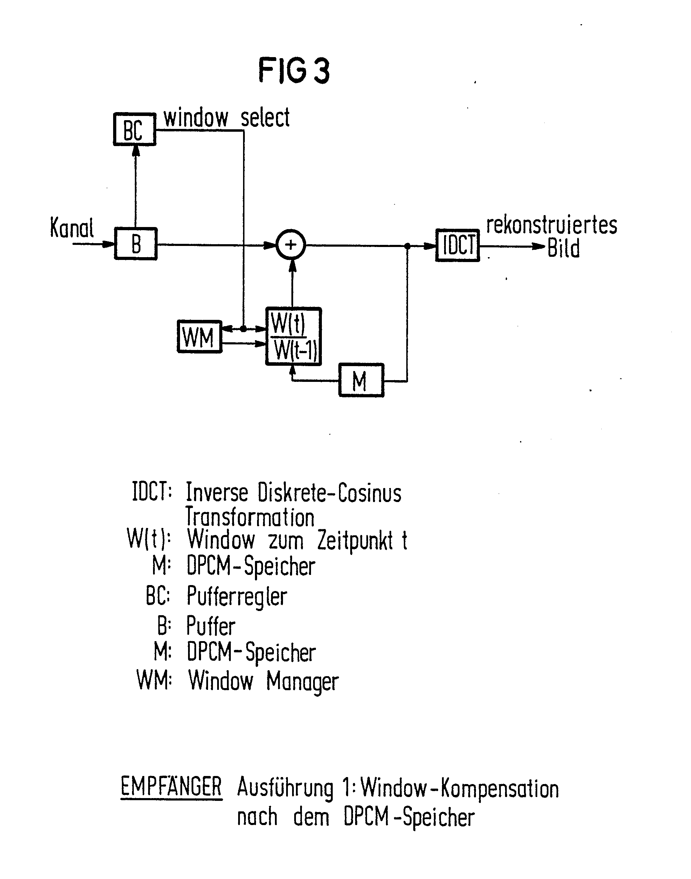

Fig. 3 zeigt, wie bereits erläutert, ein Blockschaltbild eines ersten Ausführungsbeispiels für einen Empfänger mit "Window-Kompensation" nach dem DPCM-Speicher. Bei diesem Empfänger ist der Kanal am Eingang mit dem Eingang eines Puffers B verbunden, von dem ein Ausgang mit einem ersten Eingang eines Summierglieds und ein weiterer Ausgang mit dem Eingang eines Pufferreglers BC verbunden ist. Der Ausgang des Summierglieds ist mit einer Stufe IDCT zur inversen diskreten Cosinus-Transformation verbunden, deren Ausgang ein rekonstruiertes Bildsignal abgibt. Desweiteren ist der Ausgang des Summierlgieds mit dem Eingang eines DPCM-Speichers M verbunden, dessen Ausgang mit einer Verarbeitungsstufe W(t)/W(t-1) verbunden ist, wobei W(t) für ein "Window" zum Zeitpunkt t steht. Ein Ausgang dieser Verarbeitungsstufe ist mit dem weiteren Eingang des Summierglieds verbunden. Der Ausgang des Pufferreglers BC, der ein Window-Auswahlsignal abgibt, ist mit einem Eingang eines Window-Managers WM und einem weiteren Eingang der Verarbeitungsstufe verbunden, und ein Ausgang des Window-Managers WM ist mit einem dritten Eingang der Verarbeitungsstufe verbunden.

Mit einem Sender und einem Empfänger gemäß Fig. 2 bzw. Fig. 3 ist die genannte Aufgabe auf einfache Weise lösbar.

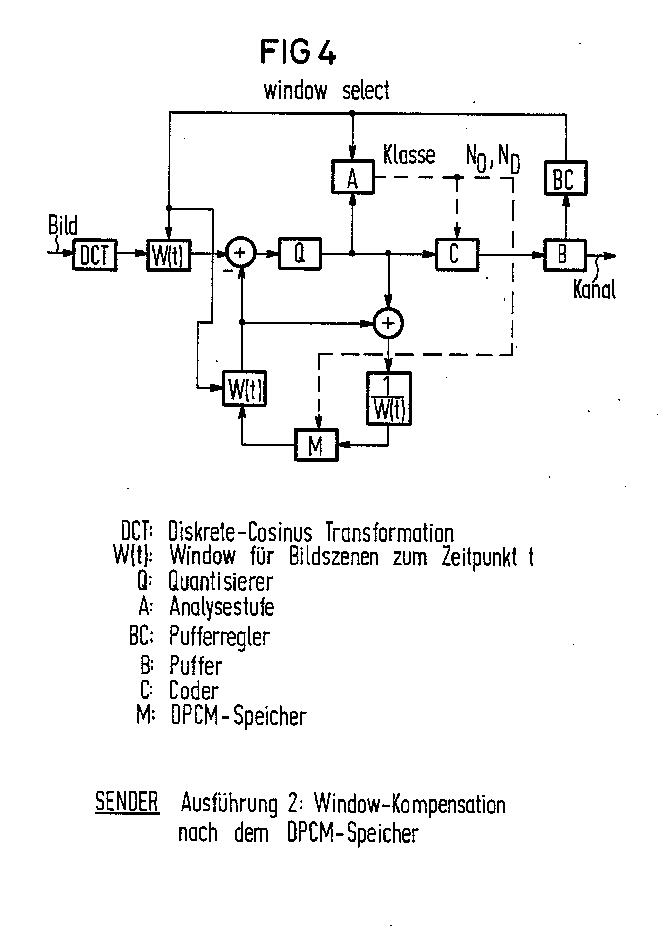

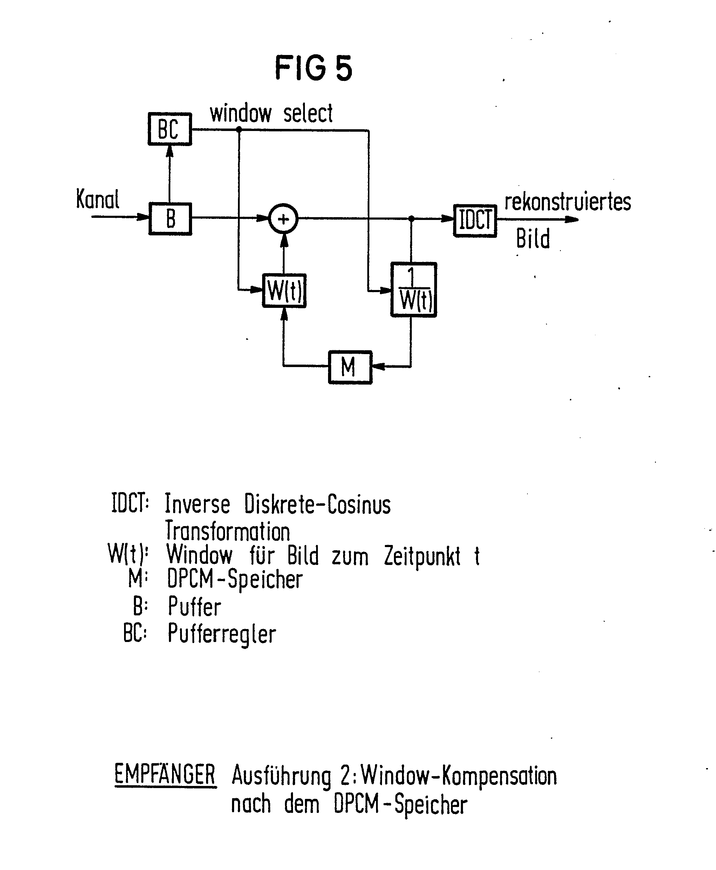

Fig. 4 u. Fig. 5 zeigen in der darin dargestellten Weise variierte Ausführungsformen des Senders bzw. des Empfängers.

Die in den Figuren 2 bis 5 gezeigten Ausführungsbeispiele sind derart beschaffen, daß sie eine optimierte Gewichtung im Zusammenwirken mit dem bereits vorgeschlagenen DCT-Hybridcodierer gemäß der deutschen Patentanmeldung P 35 13 877.7 ermöglichen.

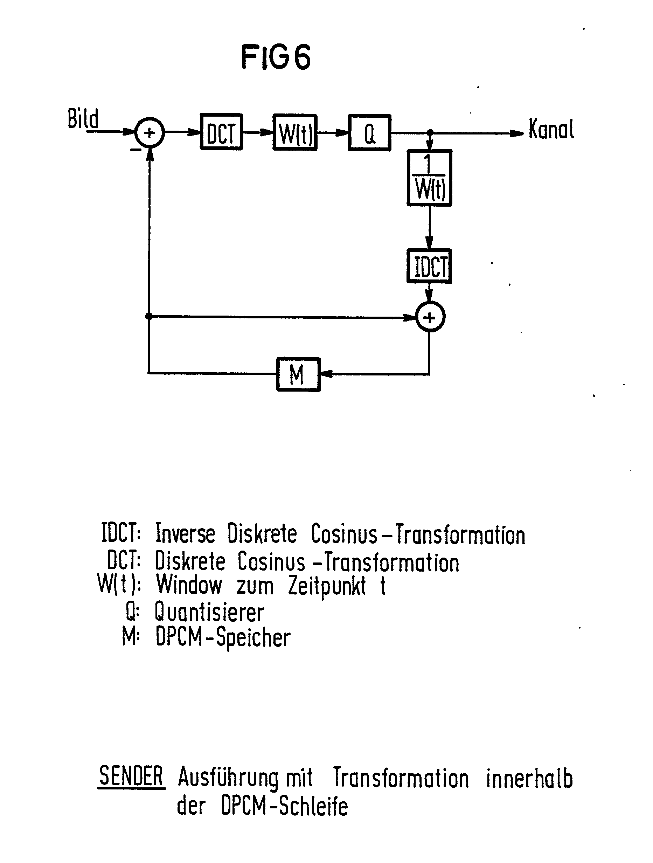

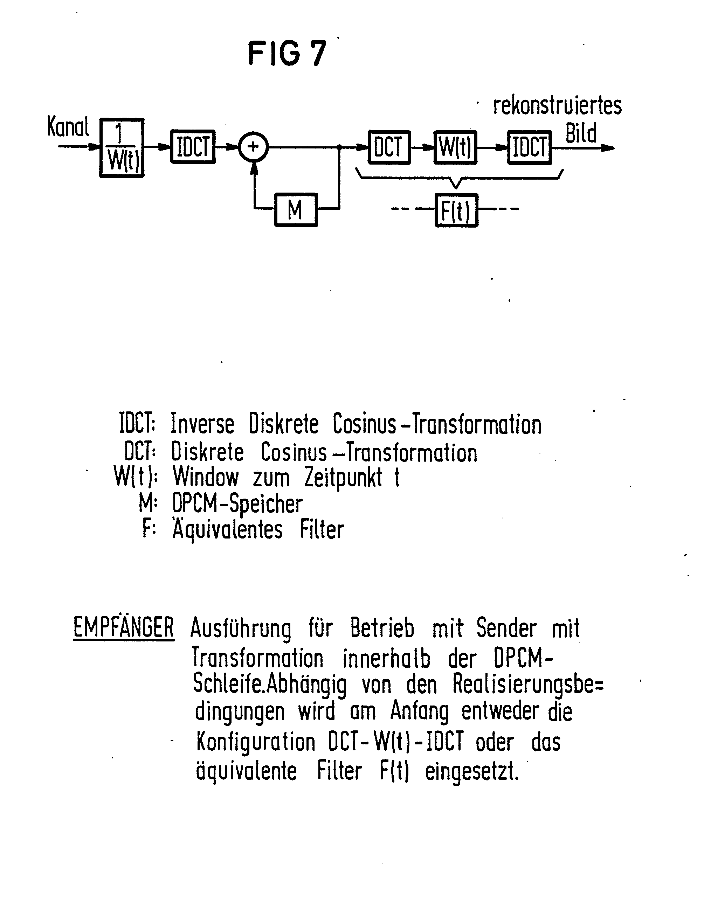

Fig. 6 zeigt, wie bereits erläutert, das Blockschaltbild eines Senders gemäß einem weiteren Ausführungsbeispiel für die Erfindung. In diesem Sender wird die Transformation innerhalb der DPCM-Schleife ausgeführt. Diese Schaltungsanordnung ist besonders kostengünstig ausgeführt, da sie gegenüber den zuvor erläuterten Schaltungsanordnungen wesentlich weniger Elemente enthält, was entsprechend auch für die in Fig. 7 gezeigte Schaltungsanordnung für den Empfänger gilt.

## Ansprüche

Anordnung zur optimierten Gewichtung übertragener Transformationskoeffizienten bei Transformationscodierern zum Zwecke der Minimierung von Faltungskoeffizienten bei der Transformationscodierung von Bildsignalen zum Zwecke einer Datenreduktion und/oder zum Zwecke der Einhaltung einer vorgegebenen Kanalrate, dadurch **gennzeichnet,** daß die zu übertagenden Koeffizienten zusätzlich einer Gewichtung (Windowing) (W) unterzogen werden und daß die Auswahl der jeweils geeigneten Gewichtungsfaktoren, die eine Minimierung der Faltungsverzerrungen in dem rekonstruierten Bild bewirken, in Abhängigkeit von der Anzahl der zu übertragenden Koeffizienten durchgeführt wird.

# FIG 1

SENDER:

Bild
Signal $\rightarrow$ [ T ] $\rightarrow$ [ S ] $\rightarrow$ [ W ] $\rightarrow$ Kanal

EMPFÄNGER:

Kanal $\rightarrow$ [ IW ] $\rightarrow$ [ IT ] $\rightarrow$ rekonstruiertes Bild

T: Transformation

S: Auswahl der zu übertragenden Transformationskoeffizien= ten(Selektor)

W: Gewichtung (Windowing) der zu übertragenden Trans= formationskoeffizienten

IW Kompensation oder Teilkompensation der im Sender an= gewandten Windows

IT: Inverse Transformation

Anordnung zur optimierten Gewichtung übertragener Transformationskoeffizienten zum Zweck der Minimierung von Faltungsverzerrungen.

# FIG 2

window select

DCT: Diskrete Cosinus-Transformation
W(t): Window für Bildszenen zum Zeitpunkt t
Q: Quantisierer
A: Analysestufe
BC: Pufferregler
B: Puffer
C: Coder
M: DPCM-Speicher
WM: Window Manager

SENDER Ausführung 1: Window-Kompensation
nach dem DPCM-Speicher

# FIG 3

IDCT: Inverse Diskrete-Cosinus
Transformation
W(t): Window zum Zeitpunkt t
M: DPCM-Speicher
BC: Pufferregler
B: Puffer
M: DPCM-Speicher
WM: Window Manager

EMPFÄNGER  Ausführung 1: Window-Kompensation
nach dem DPCM-Speicher

# FIG 4

## window select

DCT: Diskrete-Cosinus Transformation
W(t): Window für Bildszenen zum Zeitpunkt t
Q: Quantisierer
A: Analysestufe
BC: Pufferregler
B: Puffer
C: Coder
M: DPCM-Speicher


SENDER   Ausführung 2: Window-Kompensation
nach dem DPCM-Speicher

# FIG 5

window select

Kanal

rekonstruiertes
Bild

BC: Pufferregler
B: Puffer
M: DPCM-Speicher
W(t): Window für Bild zum Zeitpunkt t

IDCT: Inverse Diskrete-Cosinus
Transformation
W(t): Window für Bild zum Zeitpunkt t
M: DPCM-Speicher
B: Puffer
BC: Pufferregler

EMPFÄNGER Ausführung 2: Window-Kompensation
nach dem DPCM-Speicher

# FIG 6

IDCT: Inverse Diskrete Cosinus–Transformation
DCT: Diskrete Cosinus –Transformation
W(t): Window zum Zeitpunkt t
Q: Quantisierer
M: DPCM–Speicher

SENDER Ausführung mit Transformation innerhalb
der DPCM–Schleife

# FIG 7

```
Kanal →[1/W(t)]→[IDCT]→(+)────────┬──[DCT]→[W(t)]→[IDCT]→ rekonstruiertes Bild →
                         ↑         │    └────────┬────────┘
                         │         │         --[F(t)]---
                       [M]─────────┘
```

IDCT: Inverse Diskrete Cosinus–Transformation
DCT: Diskrete Cosinus–Transformation
W(t): Window zum Zeitpunkt t
M: DPCM-Speicher
F: Äquivalentes Filter

EMPFÄNGER Ausführung für Betrieb mit Sender mit
Transformation innerhalb der DPCM-
Schleife.Abhängig von den Realisierungsbe=
dingungen wird am Anfang entweder die
Konfiguration DCT-W(t)-IDCT oder das
äquivalente Filter F(t) eingesetzt.